## Europäisches Patentamt

## European Patent Office

## Office européen des brevets

(19)

(11) Veröffentlichungsnummer: **0 415 247 B1**

(12) **EUROPÄISCHE PATENTSCHRIFT**

(45) Veröffentlichungstag der Patentschrift: **25.10.95**

(51) Int. Cl.⁶: **C07F 3/02**, C07B 49/00

(21) Anmeldenummer: **90116033.3**

(22) Anmeldetag: **22.08.90**

(54) **Verfahren zur Herstellung von etherischen Lösungen von Arylmethylmagnesiumhalogeniden.**

(30) Priorität: **31.08.89 DE 3928812**

(43) Veröffentlichungstag der Anmeldung:
**06.03.91 Patentblatt 91/10**

(45) Bekanntmachung des Hinweises auf die
Patenterteilung:
**25.10.95 Patentblatt 95/43**

(84) Benannte Vertragsstaaten:
**BE CH DE ES FR GB IT LI NL**

(56) Entgegenhaltungen:
**DE-A- 2 149 087**

**CHEMICAL ABSTRACTS, vol. 84, no. 11, 15.
März 1976, Columbus, OH (US); M. HORAK et
al., Seite 380, Nr. 73435q**

(73) Patentinhaber: **BASF Aktiengesellschaft
Carl-Bosch-Strasse 38
D-67063 Ludwigshafen (DE)**

(72) Erfinder: **Kober, Reiner, Dr.
Im Schlittweg 20
D-6701 Fussgoenheim (DE)**
Erfinder: **Seele, Rainer, Dr.
Leiblstrasse 3
D-6701 Fussgoenheim (DE)**
Erfinder: **Zierke, Thomas, Dr.
Bahnhofstrasse 10
D-6737 Boehl-Iggelheim (DE)**
Erfinder: **Isak, Heinz, Dr.
Schoenfelderstrasse 3
D-6704 Mutterstadt (DE)**
Erfinder: **Karbach, Stefan, Dr.
Grundwiesenweg 44
D-6730 Neustadt (DE)**
Erfinder: **Wegner, Günter, Dr.
Paul Egell-Strasse 7
D-6720 Speyer (DE)**

**Beschreibung**

Die vorliegende Erfindung betrifft ein verbessertes Verfahren zur Herstellung von etherischen Lösungen von Arylmethylmagnesiumhalogeniden der allgemeinen Formel I

Ar-CH$_2$-Mg-Hal I

in der Ar eine unsubstituierte oder substituierte Arylgruppe bedeutet und Hal für Chlor oder Brom steht, durch Umsetzung eines Arylmethylhalogenids der allgemeinen Formel II

Ar-CH$_2$-Hal II

mit Magnesium in einem Ether als Lösungsmittel.

Dieses Verfahren zur Herstellung der Verbindungen I, die üblicherweise als Arylmethyl-Grignard-Verbindungen bezeichnet werden, ist für zahlreiche spezielle Fälle in verschiedenen Ausführungsformen allgemein bekannt (z.B. Houben-Weyl, Bd. XIII/2a, S. 79, Thieme Verlag, Stuttgart, 1973). Als etherisches Lösungsmittel dient hierbei vornehmlich Diethylether, obwohl dieser wegen seiner leichten Flüchtigkeit, seines tiefen Flammpunkts und der Neigung, hochexplosive Peroxide zu bilden, einen verfahrenstechnisch hohen Sicherheitsaufwand erfordert.

Andere Ether wie Tetrahydrofuran (J. Am. Chem. Soc., 95 (1973), 5919, Bull. Chem. Soc., Jap., 50 (1977) 2379) und Glykoldimethylether (DE-OS 21 49 087), haben sich dagegen für die Grignardierung von Arylmethylhalogeniden nur ausnahmsweise als geeignet erwiesen, weil die Grignardierung gerade in diesem Falle von der höchst unerwünschten Dimerisierung

Ar-CH$_2$-Mg-Hal + Hal-CH$_2$-Ar → Ar-CH$_2$-CH$_2$-Ar + MgHal$_2$

begleitet wird. Trotz der genannten Nachteile verwendet man daher hauptsächlich den Diethylether als Reaktionsmedium, weil sich die Dimerisierung hierbei noch am wenigsten störend bemerkbar macht.

Der Erfindung lag daher ein verbessertes Verfahren zur Herstellung der Verbindungen I als Aufgabe zugrunde, bei welchem die unerwünschte Dimerisierung unterdrückt wird, das hohe Ausbeuten an den Verbindungen I liefert und das sicherheitstechnisch und damit wirtschaftlich vorteilhafter ist als die Arbeitsweise unter Verwendung von Diethylether als Lösungsmittel.

Demgemäß wurde ein verbessertes Verfahren zur Herstellung von etherischen Lösungen von Arylmethylmagnesiumhalogeniden der allgemeinen Formel I

Ar-CH$_2$-Mg-Hal I

in der Ar eine unsubstituierte oder substituierte Arylgruppe bedeutet und Hal für Chlor oder Brom steht, durch Umsetzung eines Arylmethylhalogenids der allgemeinen Formel II

Ar-CH$_2$-Hal II

mit Magnesium in einem Ether als Lösungsmittel gefunden, welches dadurch gekennzeichnet ist, daß man hierbei als Lösungsmittel einen Ether der allgemeinen Formel III

tert.-Butyl-O-R III

in der R eine C$_1$-C$_3$-Alkylgruppe bezeichnet, verwendet.

Nach den bisherigen Beobachtungen ist das gute Gelingen des erfindungsgemäßen Verfahrens von der Art des Restes Ar nicht abhängig, sofern dieser keine unter den Reaktionsbedingungen reaktiven Substituenten trägt.

Als Ausgangsverbindungen II, unter denen die Arylmethylchloridverbindungen allgemein bevorzugt werden, kommen die Stammkörper dieser Klasse in Betracht, darunter vor allem die Benzylhalogenide sowie daneben die Halogenmethylnaphthaline und die Halogenmethylanthracene, die ihrerseits vorzugsweise bis zu drei Substituenten tragen können, die sich unter den Bedingungen der Grignardierung inert verhalten.

Als Substituenten seien genannt
- Halogen wie Fluor, Chlor und Brom

- $C_1$-$C_8$-Alkylgruppen, darunter vorzugsweise die Methyl-, Ethyl-, Isopropyl- oder tert.-Butylgruppe
- mehrgliedrige Methylenbrücken, die orthoständig an einen Arylring gebunden sind, darunter vorzugsweise die Tetramethyleneinheit
- $C_1$-$C_6$-Halogenalkylgruppen, mit Fluor und/oder Chlor als Halogenatomen, darunter vorzugsweise die Trifluormethylgruppe
- $C_1$-$C_6$-Alkoxygruppen, darunter vorzugsweise die Methoxygruppe
- $C_1$-$C_6$-Halogenalkoxygruppen mit Fluor und/oder Chlor als Halogenatomen, darunter vorzugsweise die Tetrafluorethoxygruppe
- $C_2$-$C_6$-Alkenylgruppen, darunter vorzugsweise die Isopropenylgruppe
- $C_3$-$C_6$-Cycloalkylgruppen, darunter vorzugsweise die Cyclopentyl- und die Cyclohexylgruppe
- die Trimethylsilylgruppe
- die Phenylgruppe und die Phenoxygruppe, die ihrerseits die vorstehend genannten Substituenten tragen können.

Beispiele für Verbindungen II, denen im Hinblick auf ihre Verwendung für organische Synthesen auf den Gebieten der Pflanzenschutzmittel, der Arzneimittel und der Farbstoffe besondere Bedeutung zukommen, sind:

Benzylchlorid

4-Chlorbenzylchlorid

4-Fluorbenzylchlorid

3-Brombenzylchlorid

4-Methylbenzylchlorid

4-Methoxybenzylchlorid

2,5-Dimethylbenzylchlorid

2-Chlormethylnaphthalin und

2-Chlormethyl-5,6,7, 8-tetrahydronaphthalin.

Die Menge der erfindungsgemäß zu verwendenden Lösungsmittel, unter denen der tert.-Butyl-methylether bevorzugt wird, beträgt im allgemeinen das 3- bis 30-fache, bevorzugt das 8- bis 15-fache der Menge der Ausgangsverbindung II.

Die Menge des Magnesiums, das vorzugsweise in Spänen eingesetzt wird, beträgt für die vollständige Umsetzung von II mindestens 1 mol pro Mol II.

zur Ausbeutesteigerung und auch zur weiteren Unterdrückung der Dimerisierung empfiehlt sich jedoch ein Molverhältnis von Mg:II von 2,5:1 bis 20:1, insbesondere von 5:1 bis 12:1.

Die Reaktionstemperaturen liegen vorzugsweise im Bereich von (-10) bis 100, besonders von 0 bis 60°C, wobei man im allgemeinen unter Normaldruck sowie unter einer Schutzgasatmosphäre (z.B. unter Stickstoff) arbeitet.

Es ist zweckmäßig, zu Beginn der Reaktion in konzentrierter Lösung zu arbeiten und dann die Restmenge des Lösungsmittels allmählich hinzuzugeben.

Im übrigen nimmt man die Grignardierung wie üblich vor, so daß sich nähere Angaben hierzu erübrigen.

Die erfindungsgemäß erhältlichen Grignard-Lösungen von I sind stabil und dienen in dieser Form unmittelbar für weitere Umsetzungen. Beispielsweise erhält man aus 2-Chlorbenzyl-magnesiumchlorid und Chlormethyl-4-fluorphenyl-keton das 1-Chlor-2-(4-fluorphenyl)-3-(2-Chlorphenyl)propan-2-ol, aus welchem seinerseits das Fungizid cis-1-(2-Chlorphenyl)-2-(4-fluorphenyl)-3-(1,2,4-triazolyl-1)propen-1 (DE-OS 26 52 313) hergestellt wird.

Beispiele

2,9 g (0,12 mol) Magnesium in 18 g tert.-Butylmethylether wurden bei 25°C unter Stickstoffatmosphäre im Laufe von 1,5 h mit einer Lösung aus 16 g (0,1 mol) 2-Chlorbenzylchlorid und 30 g des Ethers versetzt, wobei die Reaktion mit etwas 1,2-Dibromethan initiiert wurde. Zur Vervollständigung der Umsetzung wurde noch 3 h bei 35°C nachgerührt.

Anschließend wurde das Reaktionsgemisch mit Wasser versetzt, wobei die Grignard-Verbindung zu 2-Chlortoluol und wenig 2-Chlorbenzylalkohol hydrolysierte. Die organische Phase wurde sodann unter zuhilfenahme der HPLC-Analyse auf die Ausbeuten an 2-Chlortoluol und 2-Chlorbenzylalkohol, die addiert der Ausbeute an der Grignard-Verbindung entsprechen, auf das nicht umgesetzte 2-Chlorbenzylchlorid sowie auf die Ausbeute an dem unerwünschten 1,2-Di-(2-chlorphenyl)ethan analysiert.

Der Versuch wurde mit 14,4 g (0,6 mol) Magnesium wiederholt, und auf gleiche Weise wurden 14,5 g (0,1 mol) 4-Fluorbenzylchlorid, ebenfalls mit 14,4 g (0,6 mol) Magnesium, der Grignard-Reaktion unterworfen. Zum Vergleich wurden diese Reaktionen auch in anderen Ethern als Lösungsmittel durchgeführt. Die Einzelheiten dieser Versuche sowie die Ergebnisse sind der nachstehenden Tabelle zu entnehmen.

| Versuch Nr. | Ausgangs-verbindung II | Ether | Verhältnis mol Mg/mol II | Umsatz an II [%]* | Ausbeute [%]* an Grignard Verbindung | Dimeren-bildung** [%]* |
|---|---|---|---|---|---|---|
| **erfindungsgemäß** | | | | | | |
| 1 | 2-Cl-Ph-CH$_2$Cl | tert.-Butyl-O-Me | 1,2 | >95 | 75-80 | 10-15 |
| 2 | 2-Cl-Ph-CH$_2$Cl | tert.-Butyl-O-Me | 6,0 | 95 | 85-90 | 0-5 |
| 3 | 4-F-Ph-CH$_2$Cl | tert.-Butyl-O-Me | 6,0 | >98 | 64,7 | 25,6 |
| **zum Vergleich** | | | | | | |
| 4 | 4-F-Ph-CH$_2$Cl | Tetrahydrofuran | 1,2 | 99,8 | 49,9 | 47 |
| 5 | 2-Cl-Ph-CH$_2$Cl | Tetrahydrofuran | 1,2 | >73 | 0-5 | >68 |
| 6 | 2-Cl-Ph-CH$_2$Cl | Glykoldimethylether | 1,2 | >95 | 0-5 | >90 |
| 7 | 2-Cl-Ph-CH$_2$Cl | n-Dibutylether | 1,2 | 68 | 0-5 | 44 |
| 8 | 2-Cl-Ph-CH$_2$Cl | Diisopropylether | 1,2 | 61 | 0-5 | 35 |
| 9 | 2-Cl-Ph-CH$_2$Cl | Diethylether | 1,2 | 98,7 | 85-90 | <5 |
| 10 | 4-F-Ph-CH$_2$Cl | Tetrahydrofuran | 6,0 | 99,8 | 56 | 40 |
| 11 | 2-Cl-Ph-CH$_2$Cl | Tetrahydrofuran | 6,0 | >95 | 0-5 | >90 |

\* relative Flächenprozente

\*\* 1,2-Di-(chlorphenyl)ethan bzw. 1,2-Di-(4-fluorphenyl)ethan

**Patentansprüche**

1. Verfahren zur Herstellung von etherischen Lösungen von Arylmethylmagnesiumhalogeniden der allgemeinen Formel I

   Ar-CH$_2$-Mg-Hal      I

   in der Ar eine unsubstituierte oder substituierte Arylgruppe bedeutet und Hal für Chlor oder Brom steht, durch Umsetzung eines Arylmethylhalogenids der allgemeinen Formel II

   Ar-CH$_2$-Hal      II

   mit Magnesium in einem Ether als Lösungsmittel, dadurch gekennzeichnet, daß man hierbei als Lösungsmittel einen Ether der allgemeinen Formel III

   tert.-Butyl-O-R      III

   in der R eine C$_1$-C$_3$-Alkylgruppe bezeichnet, verwendet.

2. Verfahren nach Anspruch 1, dadurch gekennzeichnet, daß die Menge des Magnesiums 2,5 bis 20 mol pro Mol der Ausgangsverbindung II beträgt.

3. Verfahren nach den Ansprüchen 1 oder 2, dadurch gekennzeichnet, daß man als Ausgangsverbindungen II die Chloride (Hal = Cl) verwendet.

4. Verfahren nach den Ansprüchen 1 bis 3, dadurch gekennzeichnet, daß man es auf die Umsetzung von Benzylhalogeniden anwendet, deren Phenylgruppen bis zu drei der folgenden Substituenten tragen können:
   - Fluor, Chlor, Brom,
   - C$_1$-C$_8$-Alkylgruppen,
   - C$_1$-C$_6$-Halogenalkylgruppen mit Fluor und/oder Chlor als Halogenatomen,
   - C$_1$-C$_6$-Alkoxygruppen,
   - C$_1$-C$_6$-Halogenalkoxygruppen mit Fluor und/oder Chlor als Halogenatomen,
   - C$_2$-C$_6$-Alkenylgruppen,
   - C$_3$-C$_6$-Cycloalkylgruppen,
   - die Trimethylsilylgruppe und
   - die Phenylgruppe und die Phenoxygruppe, die ihrerseits die vorgenannten Substituenten tragen können.

**Claims**

1. A process for the preparation of an ethereal solution of an arylmethylmagnesium halide of the formula I

   Ar-CH$_2$-Mg-Hal      I

   where Ar is unsubstituted or substituted aryl and Hal is chlorine or bromine, by reacting an arylmethyl halide of the formula II

   Ar-CH$_2$-Hal      II

   with magnesium in an ether as a solvent, wherein the solvent used is an ether of the formula III

   tert-butyl-O-R      III

   where R is C$_1$-C$_3$-alkyl.

2. A process as claimed in claim 1, wherein the amount of magnesium used is from 2.5 to 20 mol per mol of the starting compound II.

3. A process as claimed in claim 1 or 2, wherein the starting compound II used is the chloride (Hal = Cl).

4. A process as claimed in any of claims 1 to 3, which is used for the conversion of benzyl halides whose phenyl groups may carry not more than three of the following substituents:
fluorine, chlorine, bromine,
$C_1$-$C_8$-alkyl,
$C_1$-$C_6$-haloalkyl having fluorine and/or chlorine as halogen atoms,
$C_1$-$C_6$-alkoxy,
$C_1$-$C_6$-haloalkoxy having fluorine and/or chlorine as halogen atoms,
$C_2$-$C_6$-alkenyl,
$C_3$-$C_6$-cycloalkyl,
trimethylsilyl and
the phenyl and phenoxy group, which in turn may carry the abovementioned substituents.

**Revendications**

1. Procédé de préparation de solutions éthérées d'halogénures d'arylméthylmagnésium de la formule générale I

$$Ar\text{-}CH_2\text{-}Mg\text{-}Hal \qquad I$$

dans laquelle Ar désigne un radical aryle non substitué ou substitué et Hal représente un atome de chlore ou de brome, par la réaction d'un halogénure d'arylméthyle de la formule générale II

$$Ar\text{-}CH_2\text{-}Hal \qquad II$$

avec le magnésium, dans un éther servant de solvant, caractérisé en ce que l'on utilise, à titre de solvant, un éther de la formule générale III

$$\text{tert-butyle-}O\text{-}R \qquad III$$

dans laquelle R représente un radical alkyle en $C_1$ à $C_3$.

2. Procédé suivant la revendication 1, caractérisé en ce que la proportion du magnésium varie de 2,5 à 20 moles par mole du composé de départ II.

3. Procédé suivant l'une quelconque des revendications 1 et 2, caractérisé en ce que l'on utilise les chlorures (Hal = Cl) à titre de composés de départ II.

4. Procédé suivant l'une quelconque des revendications 1 à 3, caractérisé en ce qu'on le met en oeuvre pour la conversion d'halogénures de benzyle dont les radicaux phényle peuvent porter jusqu'à trois des substituants qui suivent :
- fluor, chlore, brome,
- radicaux alkyle en $C_1$ à $C_8$,
- radicaux halogénoalkyle en $C_1$ à $C_6$ avec du fluor et/ou du chlore comme atomes d'halogènes,
- radicaux alcoxy en $C_1$ à $C_6$,
- radicaux halogénoalcoxy en $C_1$ à $C_6$ avec du fluor et/ou du chlore comme atomes d'halogènes,
- radicaux alcényle en $C_2$ à $C_6$,
- radicaux cycloalkyle en $C_3$ à $C_6$,
- le radical triméthylsilyle et
- le radical phényle et les radicaux phénoxy, qui, de leur côté, peuvent porter les substituants précités.